# EUROPÄISCHE PATENTSCHRIFT

(11) **EP 2 139 793 B1**
(45) Veröffentlichungstag und Bekanntmachung des Hinweises auf die Patenterteilung: **01.09.2010**
(21) Anmeldenummer: 08734804.1
(22) Anmeldetag: 27.03.2008
(51) Int. Cl.: B65G 1/137, B65G 47/51

(54) **AUTOMATISIERTES KOMMISSIONIERSYSTEM MIT INTEGRIERTER SORTIERFUNKTION UND VERFAHREN ZUM BETREIBEN DESSELBEN**
AUTOMATED COMMISSIONING SYSTEM COMPRISING AN INTEGRATED SORTING FUNCTION, AND METHOD FOR THE OPERATION THEREOF
SYSTÈME DE PRÉPARATION DE COMMANDES AUTOMATISÉ À FONCTION DE TRI INTÉGRÉE ET PROCÉDÉ DE FONCTIONNEMENT ASSOCIÉ

(30) Priorität: 30.03.2007 DE 102007016453
(43) Veröffentlichungstag der Anmeldung: 06.01.2010
(73) Patentinhaber: SSI Schäfer Noell GmbH Lager-und Systemtechnik, 97232 Giebelstadt (DE)
(72) Erfinder: SCHAEFER, Gerhard, 57290 Neunkirchen (DE)
(74) Vertreter: Wegener, Markus
(86) Internationale Anmeldenummer: PCT/EP2008/002412
(87) Internationale Veröffentlichungsnummer: WO 2008/119497

(56) Entgegenhaltungen:
- EP-A- 1 743 852
- DE-A1- 19 712 839
- DE-U1- 20 211 321

## Beschreibung

Die vorliegende Erfindung betrifft ein automatisiertes Kommissioniersystem mit integrierter Sortierfunktion zum Befördern von Artikeleinheiten bzw. Verpackungseinheiten in einer vorbestimmten Reihenfolge zu einem Arbeitsplatz, insbesondere einem Packplatz.

Die vorliegende Erfindung betrifft ferner ein Verfahren zum Bereitstellen von verschiedenen Artikeleinheiten bzw. Verpackungseinheiten eines Kommissionierlagers in einer vorbestimmten Reihenfolge.

In jüngster Zeit wird immer häufiger das Phänomen beobachtet, dass die Anforderungen an Kommissioniersysteme, insbesondere im Bereich des Einzelhandels, immer höher werden, was die Leistung des Systems betrifft. Die Anzahl von pro Tag abzuarbeitenden Kommissionieraufträgen nimmt stetig zu. Die Stückzahlen pro Auftragszeile nehmen ab, die Gesamtstückzahlen pro Tag nehmen aber zu. Dies bedeutet, dass moderne Kommissioniersysteme immer größere Kommissionierleistungen handhaben müssen, wobei auch die Anforderungen an die Dynamik immer höher werden. Wenn früher Filialen bis zu einer Woche gewartet haben, bis sie ihre Aufträge (mit entsprechendem Umfang) an ein Zentrallager geschickt haben, so werden heute (viele kleinere) Aufträge mitunter im Stundenrhythmus ausgegeben. Dies bedeutet, dass man auf Seiten des Kommissioniersystems flexibel reagieren muss. Anforderungsspitzen müssen durch eine entsprechende Leistungsfähigkeit ausgeglichen werden können.

Üblicherweise wird in solchen Kommissioniersystemen nach dem "Ware zum Mann"-Prinzip gearbeitet, um die erforderliche Leistung bereitstellen zu können. Wenn nun mehr kleinere Aufträge, bei einem immer breiter werdenden Artikelspektrum, zu bearbeiten sind, sind größere Lager und immer mehr Lagerbewegungen erforderlich, um Artikel- oder Verpackungseinheiten (gemäß dem Kommissionierauftrag) zusammenzustellen und für den Versand vorzubereiten zu können. Eine typische Artikeleinheit stellt z.B. eine Flasche Wasser dar. Eine typische Verpackungseinheit stellt z.B. eine Kiste Wasser dar. Mehrere Kisten Wasser können eine Lagereinheit bilden. Eine Lagereinheit ist eine Handhabungseinheit, die im Lager eingesetzt wird. Eine Lagereinheit ist typischerweise artikelrein (z.B. nur Wasserkisten), kann aber auch artikelgemischt sein. Die Lagereinheit umfasst üblicherweise ein Lagerhilfsmittel (Palette, Tablar, Behälter, usw.) und die Beladung (z.B. eine Lage Wasserkisten).

Eine Lagerbewegung ist ein Vorgang, bei dem eine Lagereinheit zwischen zwei Lagerelementen, z.B. zwischen einem Regal und einer Lagermaschine, bewegt wird.

All diese Anforderungen erhöhen den Handhabungsaufwand bei der Abarbeitung von Kommissionieraufträgen in Kommissioniersystemen der hier in Rede stehenden Art. Deshalb wird versucht, ein Höchstmaß an Automatisierung zu erreichen.

Als weiteres Kriterium ist die Reihenfolge, in der die Artikel- bzw. Verpackungseinheiten bei einer Packstation bereitgestellt werden, zu berücksichtigen. Entweder möchte der Auftraggeber die Artikel in einer vorgegebenen Reihenfolge auf eine Versandpalette oder in einen Versandbehälter gepackt haben, um sie anschließend (am Ort des Kunden) in einer gewünschten Reihenfolge wieder entnehmen zu können, oder er möchte leichte und zerbrechliche Artikel zuletzt bzw. obenauf gepackt haben. Die großen Stückzahlen erfordern es, dass die Artikel mit ausreichender Geschwindigkeit und in der richtigen Reihenfolge (d.h. Sequenzierung ist erforderlich) am Packplatz bereitgestellt werden.

Die deutsche Patentanmeldung DE 197 12 839 A1 befasst sich genau mit diesen Problemen und schlägt zur Lösung eine automatisierte Kommissionieranlage mit einem Behälterlager mit Regalen, einer Fördereinrichtung (Lifte an Stirnseite der Regale) zum Transport der Behälter aus dem Behälterlager zu einer Mehrzahl von Kommissionierplätzen und einem dazwischen vorgesehenen Verteilsystem vor.

Obwohl das in der DE 197 12 839 vorgeschlagene System bereits relativ hohe Leistungen (Transport von Behälter/Stunde) erzielt, sind die heute zu erfüllenden Leistungsanforderungen damit nicht zu erzielen. Dies liegt daran, dass das Verteilsystem sehr viele Arbeitsplätze mit Artikeln bzw. Behältern versorgen muss. Zum anderen müssen in jeweiligen Förderbahnstichstrecken zwischen dem Verteilsystem und den Arbeitsplätzen zusätzliche vertikale Puffer eingebaut werden, um die Sequenzierung zu ermöglichen. Das Verteilsystem - und damit auch das davor angeordnete Lager - fördert mitunter Artikel, oder besser gesagt Behälter, ungeordnet in Richtung Arbeitsplatz, da das Lager - bei der geforderten Leistung - nicht in der Lage wäre, ausreichend Behälter in der vorgegebenen Zeit in der richtigen Reihenfolge auszugeben. Ferner ist es erforderlich, dass Behälter, die zur Artikelentnahme zum Arbeitsplatz hin transportiert wurden, nach der Artikelentnahme wieder ins Regal zurücktransportiert werden. Dies erfolgt ebenfalls über das schleifenförmige Verteilsystem, so dass die Transportleistung des Verteilsystems entsprechend verringert wird, da hierüber der Hin- und Rücktransport der Behälter über dieselbe Strecke erfolgt.

Ein weiteres, herkömmliches Kommissioniersystem, das nach dem "Ware zum Mann"-Prinzip arbeitet, ist in der deutschen Patentanmeldung DE 10 2004 014 378 A1 offenbart.

Dort werden so genannte Lagerbehälter aus einem Behälterlager zu einem Kommissionierplatz transportiert. Eine Bedienperson entnimmt Artikel aus dem Behälter und gibt sie in so genannte Kommissionierschächte. Die Kommissionierschächte sind über einem Förderband angeordnet. Sobald alle Artikel, die zur Abarbeitung eines Kommissionierauftrags erforderlich sind, in einem der Kommissionierschächte (manuell) gesammelt sind, öffnet sich der Kommissionierschacht nach unten und gibt die Artikel auf das Förderband frei. Das Förderband selbst ist endlos umlaufend und mit einer Vielzahl von Trennleisten an seiner Oberfläche versehen. Die Trennleisten unterteilen das Förderband in eine Vielzahl von Abschnitten, in denen alle zu einem Kommissionierauftrag gehörenden Artikel gesammelt werden können. Die Trennleisten verhindern ein Vermischen von Artikeln von verschiedenen Kommissionieraufträgen. Das Förderband gibt die so gesammelten Artikel an seinem Ende an so genannte Auftragsbehälter ab. Auch dieses System kann die heute geforderten Kommissionierleistungen nicht erbringen. Außerdem ist bei diesem System die handhabbare Artikelgröße durch die Schachtgröße stark eingeschränkt.

Die deutsche Patentanmeldung DE 10 2004 058 216 A1 betrifft eine Kommissionieranordnung, insbesondere für eine Apotheke, mit wenigstens einem Regal mit einer Vielzahl von Regalfächern, welche jeweils ausgebildet sind, einen Artikel, insbesondere ein Medikament, aufzunehmen, wenigstens einer beweglichen Transportvorrichtung, welche mit einer Positioniervorrichtung verbunden und ausgebildet ist, einen Artikel aufzunehmen und in ein Regalfach hineinzubewegen.

Angesichts dieser Probleme im Stand der Technik ist es eine Aufgabe der vorliegenden Erfindung, ein automatisiertes Kommissioniersystem mit integrierter Sortierfunktion und ein Verfahren zum Betreiben desselben bereitzustellen, das die oben erwähnten Nachteile überwindet.

Diese Aufgabe wird gemäß der vorliegenden Erfindung mit einem automatisierten Kommissioniersystem mit integrierter Sortierfunktion zum Befördern von Artikeleinheiten in einer vorbestimmten Reihenfolge zu einem Arbeitsplatz gelöst, wobei das Kommissioniersystem aufweist: zumindest ein Lagerregal mit einer Vielzahl von Lagerplätzen zur Aufnahme von Ladehilfsmitteln, auf denen oder in denen Artikeleinheiten vorzugsweise sortenrein gelagert sind; einen endlos umlaufenden Zentralförderer, insbesondere ein Förderband, das entlang einer Längsseite des Lagerregals, und vorzugsweise zwischen zwei Lagerregalen, angeordnet ist und das in eine Vielzahl von Fenster unterteilt ist, mehrere Vertikallifte, die hintereinander an der Längsseite des Lagerregals angeordnet sind und die jeweils ein Lastaufnahmemittel zur Aufnahme und Abgabe von mindestens einem Ladehilfsmittel aufweisen, wobei jeder Vertikallift auf einem Übergabeniveau an das Zentralförderband gekoppelt ist; und eine übergeordnete Steuereinrichtung, die die Vertikallifte derart ansteuert, dass die Vertikallifte im Lagerregal bereitgestellte Ladehilfsmittel abholen, auf das Übergabeniveau transportieren und zu einem vorbestimmten Zeitpunkt eine oder mehrere Artikeleinheiten, die in oder auf dem abgeholten Ladehilfsmittel gelagert sind, zu dem Zentralförderband hin abgeben, so dass sich alle Artikeleinheiten, die zur Bearbeitung eines Kommissionierauftrags an dem Arbeitsplatz erforderlich sind, in der vorbestimmten Reihenfolge auf dem Zentralförderer befinden, nachdem der Zentralförderer alle Vertikallifte passiert hat.

Die vorliegende Erfindung setzt einen endlos umlaufenden Zentralförderer ein und unterteilt diesen entlang seiner Länge in vorzugsweise gleich große Fensterbereiche, in die hinein Artikeleinheiten abgegeben werden, die zuvor aus einem Lager geholt wurden. Der große Vorteil der vorliegenden Erfindung ist in der großen Leistungsfähigkeit des Systems zu sehen. Mit dem System der vorliegenden Erfindung können 10.000 Artikeleinheiten pro Stunde und mehr zum Arbeitsplatz geliefert werden, und zwar in der richtigen Reihenfolge. Am Arbeitsplatz kommt vorzugsweise ein einziger Strom von Artikeleinheiten an, der nicht mehr mit anderen Artikelströmen vereint und koordiniert werden muss, um alle erforderlichen Artikeleinheiten am Arbeitsplatz bereitzustellen. Der Zentralförderer wird von der Vielzahl von Vertikalliften mit Ladehilfsmitteln - und somit auch mit den entsprechenden Artikeleinheiten - gespeist. Die Vertikallifte selbst stellen eine Sequenzierungsstufe dar. Da die Regale der vorliegenden Erfindung üblicherweise in verschiedene Regalbereiche mit jeweiligen Regalebenen unterteilt sind, können durch die Auswahl einer bestimmten Regalebene oder eines Regalbereichs (langer oder kurzer Weg bis zum Vertikallift bzw. Zentralförderer) weitere Sequenzierungsstufen eingebaut werden. Das in dem Lager vorhandene Artikelspektrum ist enorm groß. Artikel können oft mehrfach im Lager vorhanden sein. Die Wahlmöglichkeit, welcher Artikel tatsächlich zur Abarbeitung eines Kommissionierauftrags verwendet wird, stellt eine weitere Sequenzierungsstufe dar.

Durch die Anordnung der vertikalen Lifte entlang der Längsseite sowie das große Artikelspektrum können Artikel bzw. Ladehilfsmittel bereits sequenziert aus dem Lager ausgelagert und an den Zentralförderer abgegeben werden.

Gemäß einer bevorzugten Ausführungsform ist zwischen jedem Vertikallift und dem Zentralförderer eine Fördertechnik, insbesondere eine segmentierte Förderbahn, angeordnet. Vorzugsweise können auch mehrere Förderbahnen (z.B. links und rechts vom Vertikallift) vorgesehen sein.

Dies stellt eine weitere Sequenzierungsstufe dar, da die Förderbahn als Puffer benutzt werden kann, mit dem Artikel getaktet an den Zentralförderer abgegeben werden. Wäre der Vertikallift direkt mit dem Zentralförderer verbunden, so müsste der Vertikallift gegebenenfalls warten, bis das dem angelieferten Artikel zugeordnete Fenster am Vertikallift vorbeifährt.

Die Abgabe der Artikeleinheiten vom Vertikallift zum Zentralförderer oder zur Förderbahn erfolgt vorzugsweise automatisiert. Dazu wird eine in das Lastaufnahmemittel des Vertikallifts integrierte vollautomatische Entladevorrichtung verwendet. Diese Entladevorrichtung ermöglicht es, dass lediglich die Artikeleinheiten, nicht aber die Ladehilfsmittel abgegeben werden. Ein Transfer des Ladehilfsmittels vom Vertikallift zur Förderbahn oder zum Zentralförderer findet nicht statt. Die im Stand der Technik mit dem Rücktransport der Ladehilfsmittel verbundenen Probleme erübrigen sich somit. Ferner wird weniger Personal benötigt.

Außerdem ist es bevorzugt, wenn mehrere Zentralförderer übereinander angeordnet sind.

Durch diese Maßnahme ist es möglich, dass die Vertikallifte Artikeleinheiten auf unterschiedlichen Ebenen abgeben. Dies ist insbesondere dann von Vorteil, wenn die Vertikallifte über mehrere Lastaufnahmemittel verfügen, die übereinander angeordnet sind. Während ein erstes Lastaufnahmemittel Artikeleinheiten an eine erste Ebene abgibt, kann ein weiteres Lastaufnahmemittel Artikel an eine andere Ebene abgeben. Alternativ können Artikeleinheiten eines Ladehilfsmittels auch an mehrere Ebenen (Aufträge) abgegeben werden. Dazu muss das Lastaufnahmemittel die verschiedenen Ebenen nacheinander anfahren. Vorzugsweise werden die Ladehilfsmittel dabei vollständig geleert, d.h. alle Artikeleinheiten werden abgegeben, so dass keine Rücklagerung des Ladehilfsmittels mehr erforderlich ist. Durch eine mehrmalige Abgabe können mehrere Aufträge parallel bedient werden, die zuvor von der Steuereinrichtung "organisiert" wurden. Falls es erforderlich ist, können die Lastaufnahmemittel währenddessen auch (beladene) Ladehilfsmittel aufnehmen, um den Nachschub in das Lager zu bewerkstelligen.

Die Leistungsfähigkeit des Regals ist so groß, dass Artikel bzw. Ladehilfsmittel für mehrere Arbeitsplätze gleichzeitig ausgegeben werden können. Dies ist ein weiterer Grund dafür, dass man mehrere Zentralförderer übereinander anordnet, da dann mehrere Arbeitsplätze gleichzeitig aus ein und demselben Lager bzw. Lagerregal mit Artikeln versorgt werden können.

Gemäß einer weiteren Ausführungsform ist an dem dem Arbeitsplatz gegenüberliegenden Ende des Zentralförderers eine manuelle Entladestation vorgesehen, die von mindestens einem Vertikallift mit Ladehilfsmitteln aus dem Lager versorgt wird.

Wenn das Artikelspektrum ("ugly") Artikel aufweist, die nur sehr schwer - z.B. aufgrund ihrer Verpackung oder ihrer äußeren Geometrie - maschinell gehandhabt werden können, empfiehlt es sich, Menschen zum manuellen Entladen einsetzen zu können. Zu diesem Zweck sind ein oder mehrere Vertikallifte so ausgelegt, dass Bedienpersonal auf dem Lastaufnahmemittel des Vertikallifts präsentierte Artikel manuell entnehmen kann. Die entnommenen Artikel können dann manuell auf das Zentralband gegeben werden, und zwar in die dafür vorgesehenen Fenster. Alternativ können wieder Förderbahnen zwischen diesen Vertikalliften und dem Zentralförderer vorgesehen sein, die die manuell entladenen Artikel zum Zentralförderer transportieren.

Die manuellen Entladestationen sind vorzugsweise am Anfang des endlos umlaufenden Zentralförderers angeordnet, um es dem Menschen zu erleichtern, die gegriffenen Artikel auf den Zentralförderer abzugeben, da am Anfang noch keines der Fenster mit einem anderen Artikel belegt ist. Natürlich könnte man die manuellen Entladestationen auch weiter stromabwärts anordnen. Dann wäre die Abgabe der gegriffenen Artikel in freie Fenster jedoch erschwert, da benachbarte Fenster mitunter belegt sein könnten, was eine höhere Konzentration beim Bedienpersonal erfordert.

Gemäß einer bevorzugten Ausgestaltung ist zwischen der manuellen Entladestation und den Zentralförderern ein weiterer Lift vorgesehen. Ferner können insbesondere zwischen diesem Lift und dem jeweiligen Zentralband weitere, getaktete, sequentiell angeordnete Förderbahnen vorgesehen sein, die wiederum als Puffer zwischen diesem Ebenenlift und den jeweiligen Zentralförderern dienen. Auch wenn kein Ebenenlift vorgesehen ist, d.h. wenn nur ein einziger Zentralförderer bedient wird, können weitere getaktete, sequentiell angeordnete Förderbänder zwischen den Abförderbändern der Vertikallifte und dem Zentralförderer vorgesehen sein, um auch einen Puffer für manuell entladene Artikel vor Abgabe auf den Zentralförderer vorzusehen.

Mit diesem Lift können manuell entladene Artikeleinheiten auf die verschiedenen Ebenen der Zentralförderer verteilt werden.

Ferner wird die oben erwähnte Aufgabe durch ein Verfahren zum Bereitstellen von verschiedenen Artikeleinheiten eines Kommissionierlagers gelöst, das mindestens ein Lagerregal mit einer Vielzahl von Lagerplätzen, die zur Aufnahme von Ladehilfsmitteln, die die verschiedenen Artikeleinheiten beinhalten, dienen, eine Vielzahl von Vertikalliften, die an der Längsseite des Lagerregals angeordnet sind, und einen endlos umlaufenden Zentralförderer zum Fördern von Artikeleinheiten zu einem Arbeitsplatz aufweist, wobei der Zentralförderer entlang einer Längsseite des Lagerregals angeordnet ist, in einer vorbestimmten Reihenfolge, mit den folgenden Schritten: Bestimmen, welche Artikeleinheiten im Kommissionierlager zur Bearbeitung eines Kommissionierauftrags erforderlich sind; Bestimmen, wo die erforderlichen Artikeleinheiten im Lagerregal gelagert sind; Verbringen von Ladehilfsmitteln, die die erforderlichen Artikeleinheiten beinhalten, zu Übergabeplätzen im Lagerregal, die den Vertikalliften zugeordnet sind; Abholen der Ladehilfsmittel von den Übergabeplätzen mittels der Vertikallifte und Verbringen der Ladehilfsmittel auf ein Übergabeniveau des Zentralförderers; Unterteilen des Zentralförderers in eine Vielzahl von Fenstern; jedem Fenster eine oder mehrere der erforderlichen Artikeleinheiten zuordnen; Übergeben der von dem Vertikallift angelieferten Artikeleinheiten an den Zentralförderer, wenn ein entsprechend zugeordnetes Fenster des Zentralförderers den Vertikallift passiert; und Koordinieren aller vorgenannten Aktionen derart, dass eine Artikeleinheit rechtzeitig in ein ihr zugeordnete Fenster verbracht wird.

Auf diese Weise können sehr viele Artikel aus einem breiten Artikelspektrum auf einen Zentralförderer, insbesondere einen Zentralförderer pro Arbeitsplatz, ausgegeben werden, und zwar in einer vorgegebenen Reihenfolge. Das erfindungsgemäße Verfahren zeichnet sich durch eine hohe Dynamik und eine hohe Leistung aus. Die Sequenzierung erfolgt bereits während des Abholens der Artikeleinheiten aus dem Regal. Eine Sequenzierung mittels des Zentralförderers ist nicht mehr erforderlich. Die auf dem Zentralförderer befindlichen Artikel sind bereits sequenziert. Somit kann der Zentralförderer auch lediglich einen einzigen Arbeitsplatz mit Artikeln versorgen.

Die Unterteilung des Zentralförderers in Fenster ermöglicht ein hohes Maß an Vorausplanbarkeit.

Gemäß einer bevorzugten Ausführungsform erfolgt das Abgeben der erforderlichen Artikeleinheiten von den abgeholten Ladehilfsmitteln in Richtung des Zentralförderers automatisiert im Vertikallift, vorzugsweise durch eine Tablarentladevorrichtung, die mit einem Lastaufnahmemittel des Vertikallifts zusammenwirkt.

Somit ist es nicht mehr erforderlich, dass die Bedienpersonen die Artikeleinheiten von den Ladehilfsmitteln herunternehmen und diese per Hand auf den Zentralförderer abgeben. Die Abgabe der Artikeleinheiten erfolgt automatisiert. Die Ladehilfsmittel werden nicht mehr zum Arbeitsplatz transportiert. Ein Rücktransport ist somit ebenfalls nicht erforderlich. Somit können mehr Artikeleinheiten in der gleichen Zeit zum Arbeitsplatz transportiert werden.

Außerdem ist es von Vorteil, wenn das Verfahren die weiteren Schritte aufweist: Bestimmen, an welchem der Vertikallifte ein Ladehilfsmittel übergeben werden soll; und Verbringen des Ladehilfsmittels an einen entsprechenden Übergabeplatz.

Diese Maßnahmen stellen eine der bereits oben erwähnten Sequenzierungsstufen dar.

Gemäß einer weiteren Ausführungsform weist das Verfahren die Schritte auf: Bestimmen, ob mehrere Ladehilfsmittel im Lagerregal die erforderlichen Artikeleinheiten beinhalten; und Auswählen eines Vertikallifts und eines der Ladehilfsmittel, wenn mehrere Ladehilfsmittel vorhanden sind, so dass die auf dem ausgewählten Ladehilfsmittel befindlichen Artikeleinheiten rechtzeitig innerhalb eines durch den Schritt des Koordinierens vorgegebenen Zeitrahmens zum Zentralförderer verbracht werden.

Diese Maßnahme stellt eine weitere Sequenzierungsstufe dar. Außerdem gewährleistet sie eine höhere Flexibilität, sollte kurzfristig eine Artikeleinheit am Arbeitsplatz benötigt werden.

Ein weiterer Vorteil ist darin zu sehen, dass die Artikeleinheiten an dem Arbeitsplatz in Versandeinheiten verpackt werden, wobei zu verpackende Artikel insbesondere nur über den Zentralförderer zum Arbeitsplatz transportiert werden.

Es erfolgt also lediglich ein einziger Artikelstrom aus dem Lager zum Arbeitsplatz. Es müssen nicht mehrere Artikelströme am Arbeitsplatz koordiniert und zusammengeführt werden, um die gewünschte Sequenz zu erzielen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine Draufsicht auf ein erfindungsgemäßes Kommissioniersystem mit einem mittig angeordneten Zentralförderer;
- Fig. 2: eine perspektivische, schematisierte Ansicht auf einen Zentralförderer;
- Fig. 3: eine Schnittansicht durch ein erfindungsgemäßes Kommissionier- system; und
- Fig. 4: ein Flussdiagramm des erfindungsgemäßen Verfahrens.

In der nachfolgenden Beschreibung der bevorzugten Ausführungsformen werden in den Zeichnungen gleiche Merkmale mit den gleichen Bezugsziffern versehen.

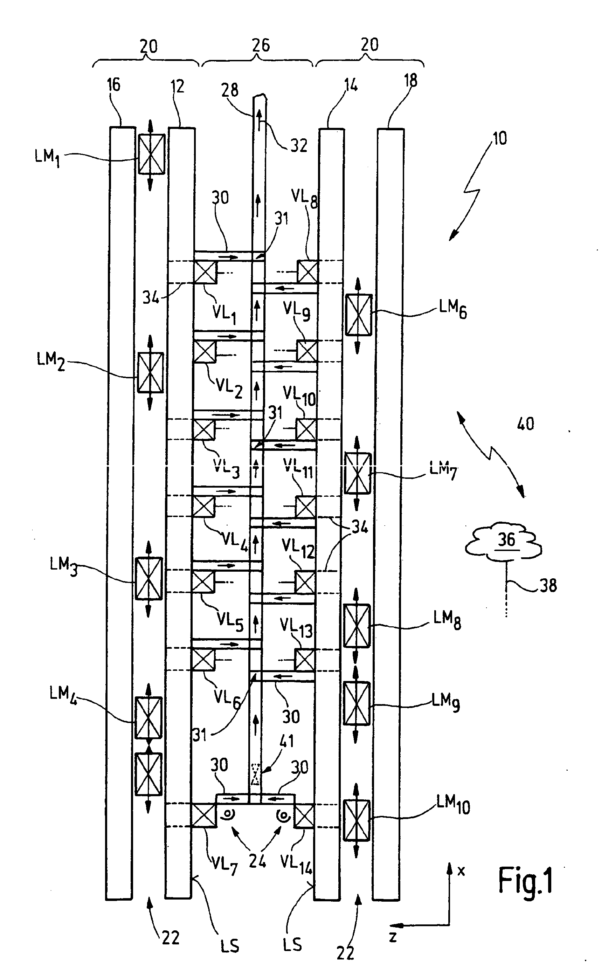

Fig. 1 zeigt eine Draufsicht auf eine Ausführungsform eines Kommissioniersystems 10 gemäß der vorliegenden Erfindung.

Es sind insgesamt vier Lagerregale 12, 14, 16 und 18 gezeigt, wobei die Lagerregale 12 und 16 sowie die Lagerregale 14 und 18 jeweils ein Lager 20, insbesondere ein Tablarlager, bilden. Zwischen den jeweiligen Lagerregalen ist jeweils eine Regalgasse 22 angeordnet, in der sich eine beliebige Anzahl von Lagermaschinen LMᵢ in X-Richtung und (nicht dargestellt) Y-Richtung innerhalb (hier nicht dargestellter) Regalbereiche bewegen können. An sich gegenüberliegenden Längsseiten LS der Lager 20 ist jeweils eine Vielzahl von Vertikalliften VLᵢ (i = 1, ..., 10) angeordnet. Die Vertikallifte VL₁ - VL₇ schließen an die Längsseite LS des in der Fig. 1 links dargestellten Tablarlagers 20 an. Die Vertikallifte VL₈ - VL₁₄ schließen an die Längsseite LS des in der Fig. 1 rechts dargestellten Lagers 20 an.

Der Aufbau eines solchen Kommissioniersystems ist ausführlich in der deutschen Patentanmeldung DE 10 2006 025 620.4 beschrieben, die von der Anmelderin der vorliegenden Anmeldung am 24.05.2006 eingereicht wurde. Dort wird der Aufbau der Regale unter Verwendung von Lagermaschinen und der Vertikallifte ausführlich beschrieben. Für Detailfragen zum Aufbau und der Funktionsweise wird auf die eben genannte Anmeldung verwiesen.

Wie bereits oben erwähnt, wird das hier eingesetzte Lager 20 insbesondere als Tablarlager verwendet. In diesem Fall ist das eingesetzte Ladehilfsmittel ein Tablar, das vorzugsweise die Grundfläche einer (Euro-)Palette aufweist. Als Lagereinheit wird eine Palettenlage verwendet. Die Versorgung des Tablarlagers 20 kann z.B. über ein (hier nicht dargestelltes) benachbartes Hochregallager für Paletten erfolgen. Am Ort des Hochregallagers werden mit einer Vielzahl von Artikeleinheiten beladene Paletten (einlagig) auf Tablare depalettiert. Die mit einer Palettenlage beladenen Tablare werden anschließend in das Tablarlager 20 transportiert und dort mittels der Lagermaschinen ein- und ausgelagert. Das Konzept eines Verwendens von Tablaren mit einer Palettenlage als Beladung ist ausführlich in der deutschen Anmeldung DE 10 2006 025 618.2 erläutert, auf die hiermit Bezug genommen wird und die von der Anmelderin am 24.05.2006 eingereicht wurde.

Zurückkehrend zu Fig. 1 sind bei den Vertikalliften VL₇ und VL₁₄ Kommissionierer 24 stationiert, die in der Lagergasse 26 zwischen den beiden Regalen 20 agieren können. Die Kommissionierer 24 sind optional vorgesehen. Sollten schwer handhabbare Artikel in den Lagern 20 gelagert sein, so können die Kommissionierer 24 diese Artikel manuell auf einen mittig zwischen den Lagern 20 angeordneten Zentralförderer 28 laden. Dazu können optional Förderbahnen 30 verwendet werden, so dass die Artikel lediglich aus dem Vertikallift entnommen und auf die Förderbahn 30 gegeben werden müssen.

Alle Vertikallifte sind vorzugsweise mit jeweils mindestens einer Förderbahn 30 verbunden, die als (getaktete) Puffer zum Einschleusen von Artikeln auf den endlos umlaufenden Zentralförderer 28 verwendet werden können. Dies erfolgt an so genannten Einschleuspunkten bzw. Übergabepunkten 31. In der Figur ist jeweils nur eine Förderbahn 30 pro Vertikallift gezeigt. Man kann Artikel aber auch links und rechts (und/oder stirnseitig) aus dem Vertikallift ausgeben.

In dem in Fig. 1 dargestellten Beispiel werden die Artikel von unten nach oben in einer Hauptförderrichtung 32 zu einem (hier nicht dargestellten) Arbeitsplatz, insbesondere einer Packstation, transportiert, wie sie ausführlich in der deutschen Patentanmeldung DE 10 2006 025 617.4 beschrieben ist, auf die hiermit Bezug genommen wird und die von der Anmelderin am 24.05.2006 eingereicht wurde.

Die Artikelflussrichtung ist in den Figuren unterstützend mit schwarzen Pfeilen schematisch angedeutet.

Alle Aktionen (Lagerbewegungen und Artikelbewegungen) im System 10 werden durch einen übergeordneten Lagerverwaltungsrechner 36 koordiniert. Diese Steuereinrichtung regelt den Fluss der Ladehilfsmittel - und der Artikeleinheiten - mittels Betätigung der verschiedenen Stellelemente, wie z.B. der Lagermaschinen LM, der Vertikallifte VL oder der (vorzugsweise getakteten) Förderbahnen 30. Die Lagermaschinen LM holen Ladehilfsmittel aus den Regalen 12 - 18 ab und geben diese an Übergabeplätze 34 in den Regalen 12 oder 14 ab, die den Vertikalliften VL gegenüberliegen. Die Vertikallifte VL holen wiederum die Ladehilfsmittel ab und transportieren diese vorzugsweise auf das Niveau des Zentralförderers 28, der insbesondere durch ein endlos umlaufendes Zentralförderband realisiert ist. Die Vertikallifte VL geben auf den Ladehilfsmitteln befindliche Artikeleinheiten an den Zentralförderer 28 ab. Dies geschieht vorzugsweise mittels einer automatisierten Entladevorrichtung, wie sie in der deutschen Patentanmeldung DE 10 2006 039 697.9 offenbart ist, auf deren Offenbarung hiermit explizit Bezug genommen wird. Ferner werden vorzugsweise zwischen Lift und Zentralförderer die Förderbahnen 30 eingesetzt, die auch einen Puffer darstellen.

Entsprechende Anweisungen werden von dem Lagerverwaltungsrechner 36 entweder über feste Leitungen 38 oder drahtlose Verbindungen 40 an die entsprechenden Stellelemente übermittelt.

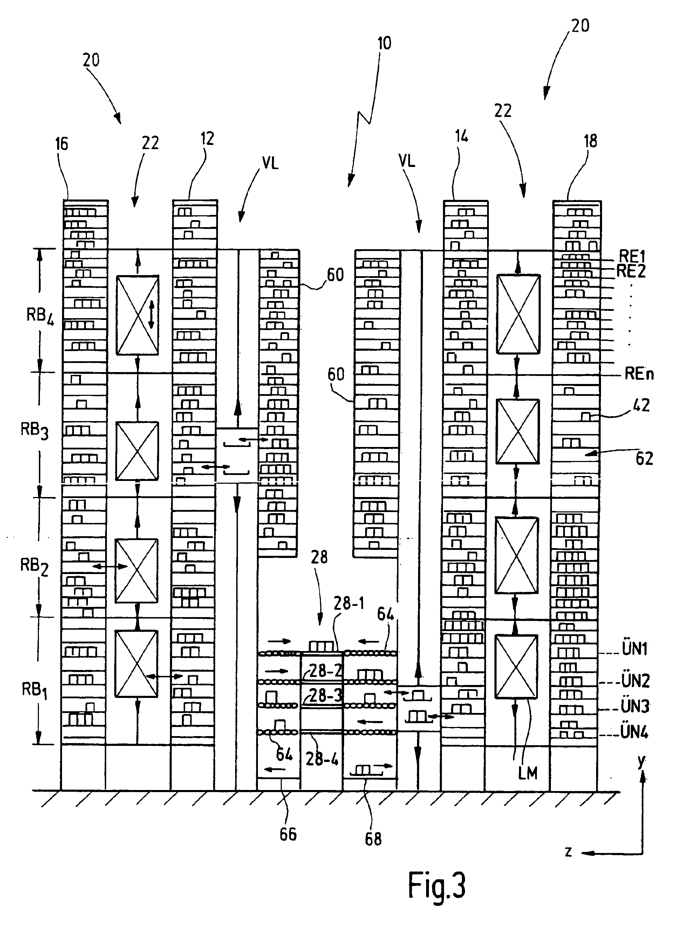

Optional kann an einem Ende des Zentralförderers 28 ein weiterer Lift 41 vorgesehen sein, der in Fig. 1 punktiert dargestellt ist und dessen Funktion im Zusammenhang mit der Fig. 3 klar werden wird.

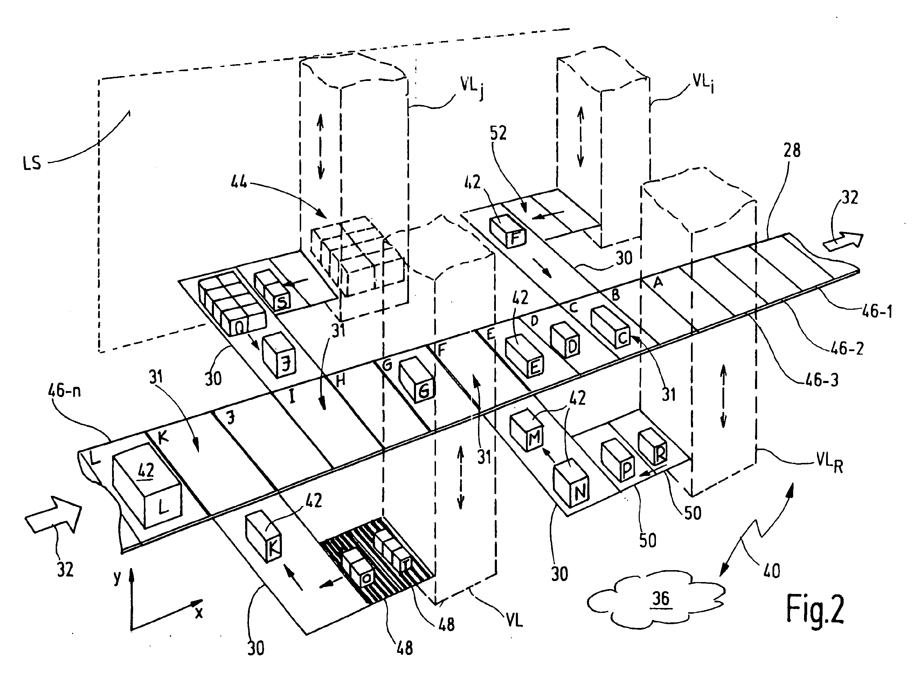

Bezug nehmend auf Fig. 2 ist eine perspektivische Sicht in eine Lagergasse 26 einer weiteren Ausführungsform eines Kommissioniersystems gemäß der vorliegenden Erfindung dargestellt.

Vertikallifte VL sowie Längsseiten LS sind mit gestrichelten Linien angedeutet.

Ein Zentralförderer 28 sowie Förderbahnen 30 und zusätzliche (optionale) Rollenförderer 48 oder Gurtförderer 50 sind mit durchgezogenen Linien dargestellt. Ferner sind Artikel- bzw. Verpackungseinheiten 42 dargestellt, die zu Veranschaulichungszwecken mit Buchstaben bezeichnet sind, um die zu erzeugende Reihenfolge (Sequenz) einfacher erklären zu können.

Im Vertikallift VLᵢ ist eine Palettenlage 44 aus Artikeleinheiten 42 exemplarisch dargestellt. Nicht dargestellt sind jedoch die Lastaufnahmemittel sowie die Ladehilfsmittel. Die oben erwähnten Entladevorrichtungen sind jedoch dazu in der Lage, einzelne Artikeleinheiten aus einer Palettenlage 44 zu isolieren und aus dem Lift auszugeben. Dieser Vorgang geschieht vollautomatisch. Anschließend können teilweise entladene Ladehilfsmittel wieder in die Regale zurückgelagert werden.

Der Zentralförderer 28 ist in eine Vielzahl von Fenster 46 (46-1, 46-2, ..., 46-n) unterteilt.

Ein Lagerverwaltungsrechner 36 weist jedem Fenster 46 eine Artikel-, Verpackungs- oder Lagereinheit 42 zu. Um dies besser verdeutlichen zu können, ist eine Sequenz von Fenstern 46 mit fortlaufenden Buchstaben des Alphabets (A, B, C, ..., L) bezeichnet.

Die Fenster A und B sind (noch) leer. Diese Fenster A und B werden von in der Fig. 2 nicht gezeigten, stromabwärts liegenden Vertikalliften mit entsprechenden Artikeleinheiten A und B versorgt werden. Die Fenster C, D und E sind bereits mit den zugehörigen Artikeln C, D und E bestückt.

Das Fenster F ist wiederum leer. Der zugehörige Artikel F wird über den Vertikallift VL geliefert. Sobald das Fenster F den entsprechenden Übergabepunkt 31 erreicht, wird der Artikel F in das Fenster F übergeben.

Auch die leeren Fenster H, I und J werden von stromabwärts gelegenen Vertikalliften (nicht dargestellt) mit entsprechenden Artikeln versorgt werden.

Der Vertikallift VLₖ hat bereits die Artikel M, N, P und R geliefert. Die Einschleusung des Artikels M in das in der Fig. 2 nicht dargestellte Fenster M erfolgt, sobald das (nicht dargestellte) Fenster M den zu dem Vertikallift VLₖ gehörigen Übergabepunkt 31 passiert.

Bezug nehmend auf Fig. 3 ist ein Querschnitt durch eine weitere Ausführungsform eines Kommissioniersystems 10 der vorliegenden Erfindung gezeigt, wobei man in X-Richtung in eine Lagergasse 26 hinein blickt. In Fig. 3 ist die Unterteilung der Lager 20 in vorzugsweise verschiedene Regalbereiche (RB1 - RB4) gut zu erkennen. Jeder Regalbereich umfasst insbesondere eine Vielzahl von Regalebenen (RE1 - REn).

Die Lagermaschinen LM können sich in X- und Y-Richtung bewegen. Die Anzahl von Lagermaschinen pro Gasse ist frei wählbar. Der Austausch von Ladehilfsmitteln zwischen Lagermaschine LM und einem Regalplatz 62 erfolgt hier in Z-Richtung, wozu jede Lagermaschine LM mit mindestens einem, und vorzugsweise vier bis sechs Lastaufnahmemitteln (nicht dargestellt) ausgestattet ist. Die Vertikallifte sind in Y-Richtung beweglich. Die Lastaufnahmemittel (nicht dargestellt) der Vertikallifte VL können Ladehilfsmittel in Z-Richtung aufnehmen und abgeben. Bei der in Fig. 3 gezeigten Ausführungsform weisen die Vertikallifte VL zusätzliche Lagerplätze 62 in Form eines "Rucksacks" 60 auf, der als zusätzlicher Puffer dient. In den Puffern 60 können so genannte Schnellläufer. d.h. oft benötigte Artikel (A-Artikel), gelagert sein, um die Wege zum (nicht dargestellten) Arbeitsplatz zu verkürzen. Hierdurch können auch die Lagermaschinen LM entlastet werden, die dann nicht zum Transport von Ladehilfsmitteln von mitunter entlegenen Lagerplätzen zu den Übergabeplätzen benötigt werden.

Ferner sind bei der in Fig. 3 dargestellten Ausführungsform nicht nur ein Zentralförderer 28, sondern vier übereinander angeordnete Zentralförderer 28-1, 28-2, 28-3 und 28-4 eingesetzt. Die jeweiligen Zentralförderer sind auf Übergabeniveaus ÜN1 - ÜN4 angeordnet. Auf gleicher Höhe sind entsprechende Förderbahnen 64 vorgesehen, die den Förderelementen 30, 48 und 50 bzw. dem Fördersegment 52 der Fig. 2 entsprechen können.

Ferner sind optionale Förderstrecken 66 und 68 dargestellt, die in X-Richtung verlaufen und zum Antransport von beladenen Ladehilfsmitteln dienen. Während ein Vertikallift VL Artikel an z.B. den untersten Zentralförderer 28-4 abgibt, kann er beladene Ladehilfsmittel aufnehmen, um diese in die Lager 20 einzulagern. Natürlich kann der Vertikallift VL auch an zwei Zentralförderer gleichzeitig abgeben. Die Anzahl der übereinander angeordneten Lastaufnahmemittel der Vertikallifte VL kann beliebig gewählt werden. Es ist somit möglich, auch mehr als zwei Zentralförderer gleichzeitig zu bedienen.

Alternativ zu den Förderstrecken 66 und/oder 68 können auch Verschiebewagen verwendet werden, die vorzugsweise schienengeführt sind. Die Verschiebewagen (nicht dargestellt) werden insbesondere unterhalb der Puffer 60 angeordnet, so dass Ladehilfsmittel, vorzugsweise im Wege eines Doppelspiels (Abgabe eines vollen Ladehilfsmittels und Aufnahme eines leeren Ladehilfsmittels), mit dem bzw. den Lastaufnahmemitteln des Vertikallifts ausgetauscht werden. Dabei können Bewegungen des Vertikallifts eingespart werden.

Ferner versteht sich, dass der hier offenbarte Zentralförderer auch für andere Ladehilfsmittel, wie z.B. Behälter, eingesetzt werden könnte.

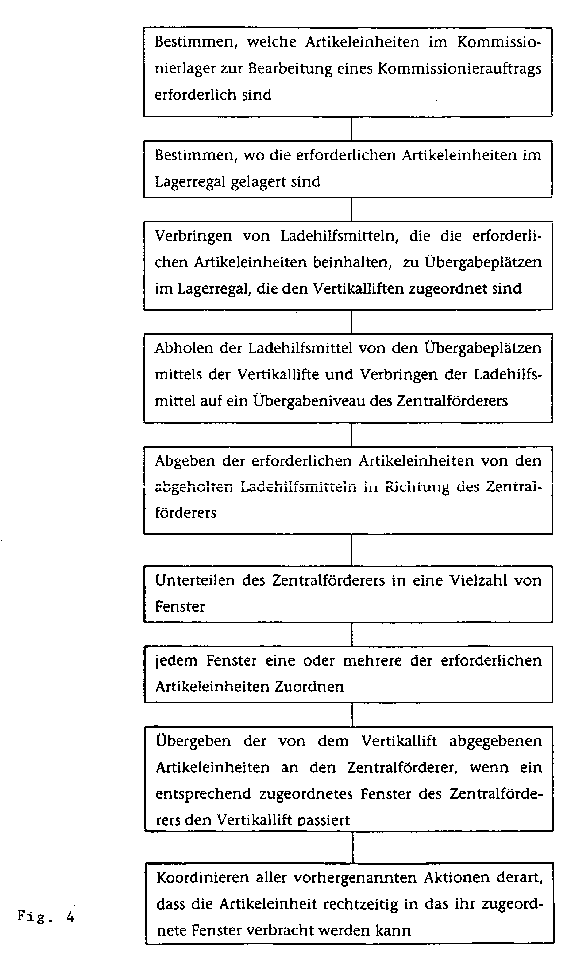

Bezug nehmend auf Fig. 4 ist das erfindungsgemäße Verfahren schematisch dargestellt.

In einem ersten Schritt S1 wird bestimmt, welche Artikeleinheiten im Kommissionierlager zur Bearbeitung eines Kommissionierauftrags erforderlich sind. Insbesondere versucht man vorab mehrere Aufträge (mit z.B. ähnlichen Artikeln und/oder Packstrukturen) "übereinander" zu legen (Batchbildung). Daraus resultieren weniger Bewegungen bzw. Lagerspiele, insbesondere der Lifte. Es können mehrfach Artikel von ein und dem selben Tablar abgegeben werden, während sich dieses im Lift befindet. Die Lifte führen dann nur kleine Hubbewegungen aus. Der Batchfaktor erhöht sich. Mehrere Aufträge werden parallel abgearbeitet. In einem zweiten Schritt S2 wird bestimmt, wo die erforderlichen Artikeleinheiten im Lagerregal gelagert sind.

In einem Schritt S3 werden Ladehilfsmittel, die die erforderlichen Artikeleinheiten beinhalten, zu Übergabeplätzen im Lagerregal verbracht, die den Vertikalliften zugeordnet sind.

In einem Schritt S4 werden die Ladehilfsmittel von den Übergabeplätzen mittels der Vertikallifte abgeholt und an ein Übergabeniveau des Zentralförderers verbracht.

In einem Schritt S5 werden die erforderlichen Artikeleinheiten von den abgeholten Ladehilfsmitteln in Richtung des Zentralförderers abgegeben.

In einem Schritt S6 wird der Zentralförderer in eine Vielzahl von Fenstern unterteilt.

In einem Schritt S7 wird jedem Fenster eine oder mehrere der erforderlichen Artikeleinheiten zugeordnet.

In einem Schritt S8 werden von dem Vertikallift abgegebene Artikeleinheiten an den Zentralförderer übergeben, wenn ein entsprechend zugeordnetes Fenster des Zentralförderers den Vertikallift passiert.

In einem Schritt S9 werden alle vorher genannten Aktionen derart koordiniert, dass die Artikeleinheit rechtzeitig in das ihr zugeordnete Fenster verbracht werden kann.

Mit dem hier beschriebenen Kommissioniersystem lassen sich viele Vorteile erzielen:
Es gibt nahezu keine Anforderung an die Eigenschaften (wie z.B. Gestalt) der Produkte. Man ist unabhängig von Größe, Gewicht und Verpackung.

Die Bereitstellung der Artikel erfolgt automatisch. Es werden nur angeforderte Artikel bewegt.

Das Artikelsortiment kann flexibel gestaltet werden. Man kann auf eine nahezu unbegrenzte Artikelvielfalt zurückgreifen.

Ein Tablar stellt in der Regel immer eine Charge dar. Eine Chargenverfolgung ist nicht erforderlich. Bei einem Tablarwechsel wird der Chargenwechsel über die IT/Steuerung registriert.

Die Artikel werden schonend behandelt. Sie werden entweder getragen oder vorzugsweise auf Förderbändern (flächig) bewegt. Linien- und Punktberührungen während des Transports können zu dazu führen, dass die Artikel blockieren und so den Fluss unterbrechen.

Wenn das Artikelspektrum wächst, stellt man einfach mehr Stellplätze im Lager bereit. Mehr ist nicht erforderlich.

Die Befüllung der Tablare kann an einem beliebigen Ort im Lager , aber vorzugsweise parallel zur Kommissionierung, erfolgen. Die Tablare können in beliebigen Lagerplätzen eingelagert werden. Der gesamte Artikelbestand kann sich ausschließlich auf Tablaren befinden. Eine Tablarbewegung erfolgt nur infolge einer direkten Kommissionieraufforderung.

Die Abgabe von Artikeln kann an beliebigen Orten geschehen. Es besteht kein Orientierungszwang.

Es können mehrere Artikel gleichzeitig von einem Tablar abgegeben werden.

Über die Förderbahn können Artikel gepuffert werden (Puffer z.B. bei Verzögerungen, Störungen etc.). Es erfolgt eine Entkopplung zwischen Auslagerung aus dem Lager und getakteter Übergabe an den Zentralförderer. Die Vertikallifte mit ihren Entladevorrichtungen können unterbrechungsfrei weiterarbeiten. Der Vertikallift muss nicht auf die Abgabe des Artikels an den Zentralförderer warten.

## Patentansprüche

1. Automatisiertes Kommissioniersystem (10) mit integrierter Sortierfunktion zum Befördern von Artikeleinheiten (42) in einer vorbestimmten Reihenfolge zu einem Arbeitsplatz, mit:
- zumindest einem Lagerregal (12, 14) mit einer Vielzahl von Lagerplätzen (62) zur Aufnahme von Lagereinheiten, auf denen oder in denen Artikeleinheiten (42), vorzugsweise sortenrein, gelagert sind, wobei das Lagerregal (12, 14) in Regalbereiche (RB) unterteilt ist, wobei jeder Regalbereich (RB) eine Vielzahl von Regalebenen (RE) aufweist, die jeweils eine Vielzahl von nebeneinander angeordneten Lagerplätzen (62) umfassen,
- einem endlos umlaufenden Zentralförderer (28), insbesondere einem Förderband, das entlang einer Längsseite (LS) des Lagerregals (12, 14), und vorzugsweise zwischen zwei Lagerregalen (12, 14), angeordnet ist und das in eine Vielzahl von Fenstern (46) unterteilt ist.
- mehreren Vertikalliften (VL), die hintereinander an der Längsseite (LS) des Lagerregals (12, 14) angeordnet sind und die jeweils ein Lastaufnahmemittel zur Aufnahme und Abgabe von mindestens einer Lagereinheit aufweisen, wobei jeder Vertikallift (VL) auf einem Übergabeniveau (ÜN) an das Zentralförderband (28) gekoppelt ist, und
- einer übergeordneten Steuereinrichtung (36), die die Vertikallifte (VL) derart ansteuert, dass die Vertikallifte (VL) im Lagerregal (12, 14) bereitgestellte Lagereinheiten abholen, auf das Übergabeniveau (ÜN) transportieren und zu einem vorbestimmten Zeitpunkt eine oder mehrere Artikeleinheiten (42), die in oder auf den abgeholten Lagereinheiten gelagert sind, zu dem Zentralförderband (28) hin abgeben, so dass sich alle Artikeleinheiten (42), die zur Bearbeitung eines Kommissionierauftrags an dem Arbeitsplatz erforderlich sind, in der vorbestimmten Reihenfolge auf dem Zentralförderer (28) befinden, nachdem der Zentralförderer (28) alle Vertikallifte (VL) passiert hat.

2. Automatisiertes Kommissioniersystem nach Anspruch 1, wobei zwischen jedem Vertikallift (VL) und dem Zentralförderer (28) eine Fördertechnik (64), insbesondere eine segmentierte Förderbahn (48), angeordnet ist, so dass die Steuereinrichtung (36) von dem Vertikallift (VL) an die Fördertechnik (64) abgegebene Artikeleinheiten (42) in vorbestimmte Fenster (46) auf dem Zentralförderer (28) fördern kann.

3. Automatisiertes Kommissioniersystem nach Anspruch 1 oder 2, wobei mehrere Zentralförderer (28-1, 28-2, 28-3, 28-4) übereinander angeordnet sind.

4. Automatisiertes Kommissioniersystem nach einem der vorhergehenden Ansprüche, wobei an einem dem Arbeitsplatz gegenüberliegenden Ende des Zentralförderers (28) eine manuelle Entladestation (24) vorgesehen ist, die von mindestens einem Vertikallift (VL₇, VL₁₄) mit Ladehilfsmitteln versorgt wird.

5. Automatisiertes Kommissioniersystem nach Anspruch 3 und 4, wobei zwischen der manuellen Entladestation (24) und den Zentralförderern (28) ein weiterer Lift (41) vorgesehen ist, um manuell entladene Artikeleinheiten (42) auf die Zentralförderer (28) in verschiedene Höhen verteilen zu können.

6. Verfahren zum Bereitenstellen von verschiedenen Artikeleinheiten (42) eines Kommissionierlagers (20), das mindestens ein Lagerregal (12, 14) mit einer Vielzahl von Lagerplätzen (62), die zur Aufnahme von Ladehilfsmitteln, die die verschiedenen Artikeleinheiten (42) beinhalten, dienen, eine Vielzahl von Vertikalliften (VL), die an der Längsseite (LS) des Lagerregals (12, 14) angeordnet sind, und einen endlos umlaufenden Zentralförderer (28) zum Fördern von Artikeleinheiten (42) zu einem Arbeitsplatz aufweist, wobei der Zentralförderer (28) entlang einer Längsseite (LS) des Lagerregals (12, 14) angeordnet ist, in einer vorbestimmten Reihenfolge, mit den folgenden Schritten:
- Bestimmen, welche Artikeleinheiten (42) im Kommissionierlager (20) zur Bearbeitung eines Kommissionierauftrags erforderlich sind (S1);
- Bestimmen, wo die erforderlichen Artikeleinheiten (42) im Lagerregal (12, 14) gelagert sind (S2);
- Verbringen von Ladehilfsmitteln, die die erforderlichen Artikeleinheiten (42) beinhalten, zu Übergabeplätzen (34) im Lagerregal (12, 14), die den Vertikalliften zugeordnet sind (S3);
- Abholen (S4) der Ladehilfsmitteln von den Übergabeplätzen (34) mittels der Vertikallifte (VL) und Verbringen der Ladehilfsmitteln auf ein Übergabeniveau (ÜN) des Zentralförderers (28);
- Abgeben der erforderlichen Artikeleinheiten (42) von den abgeholten Lagereinheiten in Richtung des Zentralförderers (S5);
- Unterteilen (S6) des Zentralförderers (28) in eine Vielzahl von Fenster (46);
- jedem Fenster (46) eine oder mehrere der erforderlichen Artikeleinheiten (42) Zuordnen (S7);
- Übergeben der von dem Vertikallift (VL) abgegebenen Artikeleinheiten (42) an den Zentralförderer (28), wenn ein entsprechend zugeordnetes Fenster (46) des Zentralförderers (28) den Vertikallift (VL) passiert (S8); und
- Koordinieren aller vorhergenannten Aktionen derart, dass die Artikeleinheit (42) rechtzeitig in das ihr zugeordnete Fenster (46) verbracht wird (S9).

7. Verfahren nach Anspruch 6, wobei das Abgeben der erforderlichen Artikeleinheiten (42) von den abgeholten Ladehilfsmitteln in Richtung des Zentralförderers (28) automatisiert im Vertikallift (VL) erfolgt, vorzugsweise durch eine Tablarentladevorrichtung, die mit einem Lastaufnahmemittel des Vertikallifts zusammenwirkt.

8. Verfahren nach Anspruch 6 oder 7, mit den weiteren Schritten:
- Bestimmen an welchen der Vertikallifte (VL) ein Ladehilfsmittel übergeben werden soll; und
- Verbringen des Ladehilfsmittels an einen entsprechenden Übergabeplatz (34).

9. Verfahren nach einem der Ansprüche 6 bis 8 mit den weiteren Schritten:
- Bestimmen, ob mehrere Ladehilfsmittel im Lagerregal (12, 14) die erforderliche Artikeleinheit (42) beinhalten; und
- Auswählen eines Vertikallifts (VL) und eines Ladehilfsmittels der Ladehilfsmittel, wenn mehrere Ladehilfsmittel vorhanden sind, so dass die auf dem ausgewählten Ladehilfsmittel befindliche Artikeleinheiten (42) innerhalb eines durch den Schritt des Koordinierens vorgegebenen Zeitrahmens zum Zentralförderer (28) verbracht werden.

10. Verfahren nach einem der Ansprüche 6 bis 9, wobei die Artikeleinheiten (42) an dem Arbeitsplatz in Versandeinheiten verpackt werden, wobei zu verpackende Artikeleinheit (42) insbesondere nur über den Zentralförderer (28) zum Arbeitsplatz transportiert werden.

## Claims

1. An automated order-picking system (10) having an integrated sorting function for conveying article units (42) in accordance with a predetermined sequence towards a workstation, comprising:
- at least one storage rack (12, 14) having a plurality of storage locations (62) for receiving storage units, on which or in which article units (42), are stored, preferably by one sort only, wherein the storage rack (12, 14) is divided in rack regions (RB), wherein each rack region (RB) comprises a plurality of rack planes (RE) which respectively comprise a plurality of storage locations (62) being arranged side-by-side,
- an endlessly rotating central conveyor (28), particularly a conveyor belt, being arranged along a longitudinal side (LS) of the storage rack (12, 14) and preferably between two storage racks (12, 14), and which is divided into a plurality of windows (46),
- a number of vertical elevators (VL), being arranged one behind the other along the longitudinal side (LS) of the storage rack (12, 14), which respectively comprise a load suspension device for receiving and delivering at least one storage unit, wherein each of the vertical elevators (VL) is coupled to the central conveyor belt (28) at a handing-over level (ÜN), and
- a superordinated control device (36) controlling the vertical elevators (VL) such that the vertical elevators (VL) retrieve storage units being provided in the storage rack (12, 14), transport them to the handing-over level (ÜN), and deliver at a predetermined time one or more article units (42), which are stored in or on the retrieved storage units, towards the central conveyor belt (28), so that all of the article units (42), which are required for the processing of a picking order at the workstation, are located on the central conveyor (28) in accordance with the predetermined sequence, after the central conveyor (28) has passed all of the vertical elevators (VL).

2. The automated order-picking system of claim 1, wherein between each of the vertical elevators (VL) and the central conveyor (28) a conveyor (64), particularly a segmented conveyor track (48), is arranged so that the control device (36) can convey article units (42), which have been delivered from the vertical elevator (VL) towards the conveyor (64), into predetermined windows (46) on the central conveyor (28).

3. The automated order-picking system of claim 1 or 2, wherein a number of central conveyors (28-1, 28-2, 28-3, 28-4) are arranged on top of each other.

4. The automated order-picking system of any of the preceding claims, wherein a manual unloading station (24) is provided at an end of the central conveyor (28) arranged opposite to the workstation, wherein the unloading station (24) is supplied with load supports by at least one vertical elevator (VL₇, VL₁₄).

5. The automated order-picking system of claim 3 and 4, wherein another elevator (41) is provided between the manual unloading station (24) and the central conveyor (28) for allowing distribution of manually unloaded article units (42) towards the central conveyors (28) in different heights.

6. A method for providing different article units (42) of an order-picking warehouses (20), which comprises at least one storage rack (12, 14) having a plurality of storage locations (62) serving for receipt of load supports containing the different article units (42), a plurality of vertical elevators (VL) arranged along a longitudinal side (LS) of the storage rack (12, 14), and an endlessly rotating central conveyor (28) for conveying article units (42) in a predetermined sequence towards a workstation, wherein the central conveyor (28) is arranged along a longitudinal side (LS) of the storage rack (12, 14), wherein the method comprises the following steps:
- determining (S1) which article units (42) in the order-picking warehouse (20) are required for processing a picking order;
- determining (S2) where the required article units (42) are stored in the storage rack (12, 14);
- moving load supports (S3), which contain the required article units (42), towards handing-over locations (34) located within the storage rack (12, 14), being assigned to the vertical elevator;
- retrieving (S4) the load supports from the handing-over locations (34) by means of the vertical elevators (VL), and moving the load supports to a handing-over level (HL) of the central conveyor (28);
- delivering (S5) the required article units (42) from the retrieved storage units towards the central conveyor;
- dividing (S6) the central conveyor (28) into a plurality of window (46);
- assigning (S7) to each of the windows (46) one or more of the required article units (42);
- handing over (S8) the article units (42) by means of the vertical elevator (VL) towards the central conveyor (28), if a correspondingly assigned window (46) of the central conveyor (28) passes the vertical elevator (VL); and
- coordinating (S9) all of the above-mentioned actions such that the article unit (42) is moved in due time into the window (46) assigned thereto.

7. The method of claim 6, wherein the delivery of the required article units (42) from the retrieved load supports towards the central conveyor (28) happens by means of the vertical elevator (VL) in an automated manner, preferably by a tray unloading device cooperating with a load suspension device of the vertical elevator.

8. The method of claim 6 or 7, comprising the additional steps:
- determining, to which of the vertical elevators (VL) a load support is to be handed over; and
- moving the load support towards a corresponding handing-over location (34).

9. The method of any of the claims 6 to 8 comprising the additional steps of:
- determining, whether several load supports in the storage rack (12, 14) contain the required article unit (42); and
- selecting one of the vertical elevators (VL) and one load support from the load supports, if several load supports are present, so that the article units (42) located on the selected load support are moved towards the central conveyor (28) within a time frame set by the step of coordinating.

10. The method of any of the claims 6 to 9, wherein the article units (42) are packed at the workstation into shipping units, wherein article units (42) to be packed are transported to the workstation, particularly only via the central conveyor (28).

## Revendications

1. Système de préparation des commandes automatisé (10) à fonction de tri intégrée pour transporter des articles unitaires (42) dans une succession prédéterminée jusqu'à un poste de travail, comprenant :
- au moins un rayonnage de stockage (12, 14) avec une pluralité d'emplacements de stockage (62) pour recevoir des unités de stockage, sur lesquelles ou dans lesquelles des articles unitaires (42) sont stockés, de préférence par type, le rayonnage de stockage (12, 14) étant divisé en zones de rayonnage (RB), chaque zone de rayonnage (RB) présentant une pluralité de plans de rayonnage (RE) qui comprennent à chaque fois une pluralité d'emplacements de rayonnage adjacents (62),
- un transporteur central en mouvement sans fin (28), notamment une bande transporteuse, qui est disposé le long d'un côté longitudinal (LS) du rayonnage de stockage (12, 14), et de préférence entre deux rayonnages de stockage (12, 14) et qui est divisé en une pluralité de fenêtres (46),
- plusieurs monte-charges verticaux (VL), qui sont disposés les uns derrière les autres sur le côté longitudinal (LS) du rayonnage de stockage (12, 14) et qui présentent à chaque fois un moyen de réception de charge, chaque monte-charge vertical (VL) étant accouplé sur un niveau de transfert (ÜN) à la bande transporteuse centrale (28), et
- un dispositif de commande prioritaire (36), qui commande les monte-charges verticaux (VL) de telle sorte que les monte-charges verticaux (VL) prélèvent des unités de stockage mises à disposition dans le rayonnage de stockage (12, 14), les transportent au niveau de transfert (ÜN) et déposent à un instant prédéterminé un ou plusieurs articles unitaires (42), qui sont stockés dans ou sur les unités de stockage prélevées, vers la bande transporteuse centrale (28), de sorte que tous les articles unitaires (42), qui sont requis pour traiter un ordre de préparation de commandes sur le poste de travail, se trouvent dans la séquence prédéterminée sur le transporteur central (28) après que le transporteur central (28) a passé tous les monte-charges (VL).

2. Système de préparation des commandes automatisé selon la revendication 1, dans lequel on dispose entre chaque monte-charge vertical (VL) et le transporteur central (28) un équipement technique de transport (64), en particulier une bande transporteuse segmentée (48), de sorte que le dispositif de commande (36) puisse transporter les articles unitaires (42) déposés depuis le monte-charge vertical (VL) sur l'équipement technique de transport (64) dans des fenêtres prédéterminées (46) sur le transporteur central (28).

3. Système de préparation des commandes automatisé selon la revendication 1 ou 2, dans lequel plusieurs transporteurs centraux (28-1, 28-2, 28-3, 28-4) sont disposés les uns sur les autres.

4. Système de préparation des commandes automatisé selon l'une quelconque des revendications précédentes, dans lequel on prévoit à une extrémité du transporteur central (28) opposée au poste de travail un poste de déchargement manuel (24) qui est alimenté par au moins un monte-charge vertical (VL₇, VL₁₄) avec des moyens de chargement auxiliaires.

5. Système de préparation des commandes automatisé selon les revendications 3 et 4, dans lequel on prévoit entre le poste de déchargement manuel (24) et les transporteurs centraux (28) un autre monte-charge (41), afin de pouvoir répartir à différentes hauteurs des articles unitaires déchargés manuellement (42) sur le transporteur central (28).

6. Procédé pour fournir différents articles unitaires (42) d'un entrepôt de préparation des commandes (20), qui présente au moins un rayonnage de stockage (12, 14) avec une pluralité d'emplacements de stockage (62) qui servent à recevoir des moyens de chargement auxiliaires, qui contiennent les différents articles unitaires (42), une pluralité de monte-charges verticaux (VL), qui sont disposés sur le côté longitudinal (LS) du rayonnage de stockage (12, 14) et un transporteur central (28) en mouvement sans fin pour le transport des articles unitaires (42) jusqu'à un poste de travail, le transporteur central (28) étant disposé le long d'un côté longitudinal (LS) du rayonnage de stockage (12, 14), dans une séquence prédéterminée, comprenant les étapes suivantes :
- déterminer quels articles unitaires (42) dans l'entrepôt de préparation des commandes (20) sont requis pour traiter un ordre de préparation des commandes (S1) ;
- déterminer où les articles unitaires requis (42) sont stockés dans le rayonnage de stockage (12, 14) (S2) ;
- amener des moyens de chargement auxiliaires qui contiennent les articles unitaires requis (42), à des emplacements de transfert (34) dans le rayonnage de stockage (12, 14), lesquels sont associés aux monte-charges (S3) ;
- prélever (S4) les moyens de chargement auxiliaires des emplacements de transfert (34) au moyen des monte-charges verticaux (VL) et amener les moyens de chargement auxiliaires à un niveau de transfert (ÜN) du transporteur central (28) ;
- déposer les articles unitaires requis (42) depuis les unités de stockage prélevées dans la direction du transporteur central (S5) ;
- diviser (S6) le transporteur central (28) en une pluralité de fenêtres (46) ;
- associer (S7) à chaque fenêtre (46) un ou plusieurs des articles unitaires requis (42) ;
- transférer les articles unitaires (42) déposés par le monte-charge vertical (VL) sur le transporteur central (28), quand une fenêtre associée correspondante (46) du transporteur central (28) passe par le monte-charge vertical (VL) (S8) ; et
- coordonner toutes les actions susmentionnées de telle sorte que l'article unitaire (42) soit amené (S9) au bon moment dans la fenêtre associée (46).

7. Procédé selon la revendication 6, dans lequel le dépôt des articles unitaires requis (42) depuis les moyens de chargement auxiliaires prélevés dans la direction du transporteur central (28) a lieu de manière automatisée dans le monte-charge vertical (VL), de préférence par un dispositif de déchargement d'étagères, qui coopère avec un moyen de réception de charges du monte-charge vertical.

8. Procédé selon la revendication 6 ou 7, comprenant les étapes supplémentaires suivantes :
- déterminer sur lesquels des monte-charges verticaux (VL) un moyen de chargement auxiliaire doit être transféré et
- amener le moyen de chargement auxiliaire à un emplacement de transfert correspondant (34).

9. Procédé selon l'une quelconque des revendications 6 à 8, comprenant les étapes supplémentaires suivantes :
- déterminer si plusieurs moyens de chargement auxiliaires dans le rayonnage de stockage (12, 14) contiennent les articles unitaires requis (42) ; et
- sélectionner un monte-charge vertical (VL) et un moyen de chargement auxiliaire parmi les moyens de chargement auxiliaires, quand plusieurs moyens de chargement auxiliaires sont présents, de sorte que les articles unitaires (42) se trouvant sur le moyen de chargement auxiliaire sélectionné soient amenés au transporteur central (28) en l'espace d'un intervalle de temps prédéfini par l'étape de coordination.

10. Procédé selon l'une quelconque des revendications 6 à 9, dans lequel les articles unitaires (42) sont emballés sur le poste de travail en unités à expédier, les articles unitaires (42) à emballer étant transportés notamment seulement par le biais du transporteur central (28) jusqu'au poste de travail.
